# EUROPÄISCHE PATENTSCHRIFT

(11) **EP 0 540 816 B1**
(45) Veröffentlichungstag und Bekanntmachung des Hinweises auf die Patenterteilung: **11.01.1995**
(21) Anmeldenummer: 92109605.3
(22) Anmeldetag: 06.06.1992
(51) Int. Cl.: C04B 16/06

(54) **PAN-Strukturformkörper für die Verarbeitung in hydraulischen Bindern**
PAN-fiber for mixing with hydraulic binders
Corps formés de structure PAN pour être incorporé dans des liants hydrauliques

(30) Priorität: 10.10.1991 DE 4133894
(43) Veröffentlichungstag der Anmeldung: 12.05.1993
(73) Patentinhaber: MÄRKISCHE FASER AG PREMNITZ, 14727 Premnitz (DE)
(72) Erfinder: Schöning, Klaus-Jürgen, Dipl.-Ing., O-1830 Rathenow (DE); Neuheiser, Lothar, Dr., O-1830 Rathenow (DE); Schmidt, Burkhard, Dr., O-1832 Premnitz (DE); Wolf, Klaus-Friedrich, Dr., O-1830 Rathenow (DE)

(56) Entgegenhaltungen:
- DD-C- 255 957
- DE-A- 3 112 238
- GB-A- 2 075 076

## Beschreibung

Die Erfindung betrifft Polyacrylnitril(PAN)-Strukturformkörper mit spezifischen Eigenschaften für die Verarbeitung in hydraulischen Bindern.

Wegen des äußerst optimalen Zusammenwirkens der Hauptbestandteile Zement als Matrix und Asbest als Makro- und Mikrobewehrung und der Möglichkeit der Verarbeitung nach hochproduktiven Herstellungstechnologien ist Asbest für den Einsatz im Baustoffsektor hervorragend geeignet. Jedoch wird wegen dar gesundheitsschädigenden Wirkung von Asbeststäuben international intensiv an der vollständigen Substitution von Asbest gearbeitet Bisher ist es jedoch noch nicht gelungen, diesen Rohstoff durch ein einziges Produkt so zu ersetzen, daß; die vorhandene hochproduktive Technik ohne wesentliche Veränderungen genutzt werden kann.
In der Industrie sind in den letzten Jahren umfangreiche Anstrengungen gemacht worden billige neue Fasern für die Zementverstärkung zu finden, die sich eignen, auf den bisher verwendeten Produktionsanlagen der Asbestzementindustrie verarbeitet zu werden. Die Anforderungen, die an solche Fasern gestellt werden, sind hoch, weil sie hinsichtlich ihrer Eigenschaften, insbesondere der Gewährleistung der Filterwirkung und damit dem Zementrückhaltevermögens als Grundvoraussetzung für das Bilden der einzelnen Faser-Zement-Schichten, der Verleihung eines genügenden Zusammenhaltens von Anfang an zur Handhabung der noch weichen unausgehärteten Platten und Formteile, ihrer guten Affinität zum Zement und der Bewehrung des Produktes, an der Asbestfaser gemessen werden. Es sind bereits Plattenprodukte bekannt, die Hilfsfasern auf Cellulosebasis enthalten (DE-OS 2 624 130).
Gemäß DE-OS 3 401 237 wird die Zusammensetzung des härtbaren Breis mit Cellulosefasern mit speziellem Gewichtsanteil und spezieller Länge optimiert.
Bei der Suche nach Ersatzstoffen des Asbests als Prozeßkomponente wurde ein auf natürlicher Basis wie Stroh, Bambus, Baumwolle, Hanf, Ramie, Maulbeerblättern usw. hargestellter Pulp gefunden (EP 225 932).
Hierbei war es erforderlich, ein ganz besonderes Verhältnis von Durchmesser zu Dicke von nicht weniger als 20 und einen mittleren Durchmesser im Bereich 3 x 10⁻² bis 5 mm zu beachten.
In DE-OS 3 116 005 sind Zusatzstoffe aus der Gruppe der synthetischen Fasern, z.B. Polyvinylalkohol und Polyacrylnitril beschrieben, deren Einsatz in einer Mischung mit Fasern pflanzlichen Ursprungs, insbesondere Zellstoff im Verhältnis 1:1 erfolgt.
Die nach diesen bekannten Verfahren erhaltenen Pulps mit speziellen Eigenschaften unterliegen aufwendigen Herstellungsprozessen und verursachen hohe Kosten.
Durch den Einsatz dieser Produkte werden keine Faserzementprodukte erhalten, die Asbest vollständig substituieren. Die zur Herstellung des Pulps verwendeten Polyacrylnitrilfasern mit ihren bekannten spezifischen Eigenschaften besitzen keine gerauhte Oberfläche und keine locker volumige Ausbreitung und große Oberfläche zur Anlagerung von Zement bei gleichzeitiger Filterwirkung gegenüber dem Zement sowie eine sehr geringe Spannungsaufnahme im Mikrobereich.

Der Erfindung liegt die Aufgabe zugrunde, einen PAN-Strukturformkörper mit spezifischen Eigenschaften für die Verarbeitung in hydraulischen Bindern aufzufinden, der einfach und kostengünstig herstellbar ist und sich nach dem Hatschek-, Mazza- und anderen, in der Baustoffindustrie bekannten Verfahren verarbeiten läßt.
Diese Aufgabe wird mit den Merkmalen der Patentansprüche gelöst. Dabei stellt der Schlankheitsgrad den Quotienten aus Länge zu Durchmesser im Bereich 3-600, der Prozeßfaktor das Produkt aus Wasserrückhaltevermögen und Oberfläche > 7,0 m²/g und der Armierungsfaktor den Quotienten aus E-Modul zu Zugfestigkeit im Bereich zwischen 14 und 25 dar.
Die erfindungsgemäßen PAN-Strukturformkörper weisen im Vergleich zu einer textilen PAN-Faser ein wesentlich verbessertes hydrophiles Verhalten auf und ermöglichen somit eine günstigere Einarbeitung in den Zement. Gegenüber herkömmlichen Pulps haben sie weiterhin den Vorteil daß ihre Prozeß- und Armierungseigenschaften nicht verlorengehen. Neben den besonders günstigen Oberflächeneigenschaften des erfindungsgemäßen PAN-Formkörpers ist außerdem ihre definierte Orientierung besonders vorteilhaft für die mikroarmierende Wirkung.

### Beispiel

Eine Lösung eines Acrylnitrilcopolymerisates aus 92,5 M % Acrylnitril, 6,5 M % Acrylsäuremethylester und 1,0 M % Natriumallylsulfonat in Dimethylformamid wird mit einem Düsenverzug von 0,40 horizontal aus einer Düse mit 135 000 Loch bei einem Lochdurchmesser von 70 µm in ein 29 °C warmes: 50 M % Dimethylformamid enthaltendes wäßriges Koagulationsbad gespritzt, anschließend einer hydrothermischen Fibrillenorientierung bei 99 °C unterzogen, bei 24 bis 32 °C gewaschen, bei 130 bis 155 °C fixiert und bei 8 bis 35 °C hydromechanisch bis zu einer Oberfläche von 18,0 m²/g aufgelockert. Der erhaltene PAN-Strukturformkörper hat einen Schlankheitsgrad von 71,3, einen Prozeßfaktor von 18 m²/g und einen E-Modul von 10 326 MPa. Der Armierungsfaktor liegt bei 18,43. Die Rauhung wird durch das Zwischenkapillarvolumen V_{K}(10 000 ≧ r ≧ 1 500 nm) von 800 mm³/g und das Makroporenvolumen V_{Ma} (1 500 ≧ r ≧ 100 nm) von 320 mm³/g verdeutlicht.
Das Wasserrückhaltevermögen beträgt 60 %, das Mikroporenvolumen V_{Mi} (100 ≧ r ≧ 3,9 nm) von 64 mm³/g und der häufigste Porenradienbereich liegt bei 5 000 ± 1 000.
Die Schlankheitsgradverteilung, die einer Gaußschen Glockenkurve folgt, ist aus der folgenden Darstellung zu entnehmen:

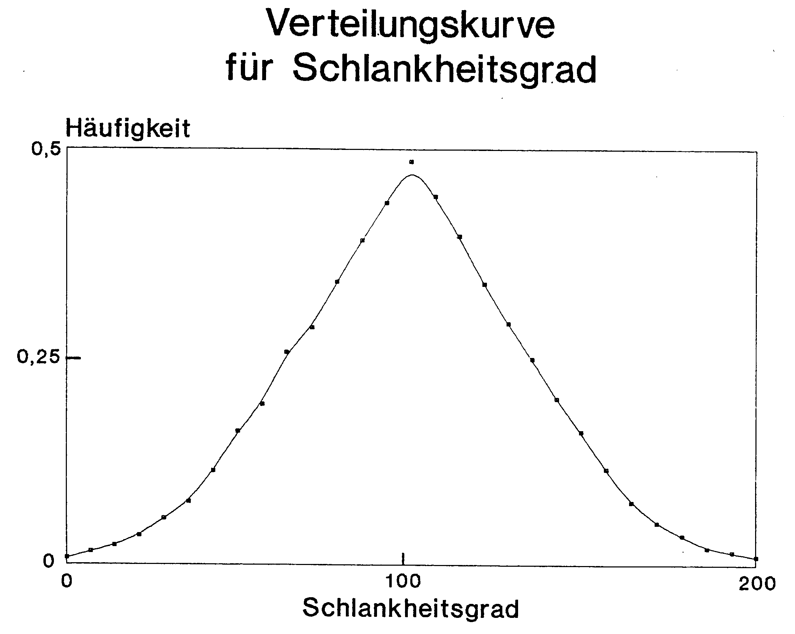

## Patentansprüche

1. PAN-Strukturformkörper mit spezifischen Eigenschaften für die Verarbeitung in hydraulischen Bindern, dadurch gekennzeichnet, daß ihr Schlankheitsgrad 3 bis 600 beträgt, der Prozeßfaktor >7,0 m²/g ist, dar E-Modul mindestens 10 000 MPa beträgt und der Armierungsfaktor im Bereich zwischen 14 und 25 liegt.

2. PAN-Strukturformkörper nach Anspruch 1, dadurch gekennzeichnet, daß die Schlankheitsgradverteilung einer Gaußschen Glockenkurve folgt.

3. PAN-Strukturformkörper nach Anspruch 1 und 2, dadurch gekennzeichnet, daß sie eine gerauhte Oberfläche besitzen, die hydrophiliert und zementaffin ausgerüstet ist.

4. PAN-Strukturformkörper nach Anspruch 1 bis 3, dadurch gekennzeichnet, daß die Oberfläche mindestens 15 m²/g beträgt.

5. PAN-Strukturformkörper nach Abspruch 1 bis 4, dadurch gekennzeichnet, daß sie ein Wasserrückhaltevermögen von mindestens 50 % besitzen.

6. PAN-Strukturformkörper nach Anspruch 1 bis 5, dadurch gekennzeichnet, daß das Zwischenkapillarvolumen mindestens 500 mm³/g beträgt.

7. PAN-Strukturformkörper nach Anspruch 1 bis 6, dadurch gekennzeichnet, daß das Makroporenvolumen mindestens 200 mm³/g beträgt.

8. PAN-Strukturformkörper nach Anspruch 1 bis 7, dadurch gekennzeichnet, daß das Mikroporenvolumen mindestens 50 mm³/g beträgt.

9. PAN-Strukturformkörper nach Anspruch 1 bis 8, dadurch gekennzeichnet, daß der häufigste Porenradienbereich 3 500 nm und 6 500 nm beträgt.

## Claims

1. PAN structural moulded bodies having specific properties for processing in hydraulic binders, characterised in that the ratio of slenderness thereof is from 3 to 600, the process factor is > 7,0 m²/g, the modulus of elasticity is at least 10 000 MPa and the reinforcing factor lies within the range 14 to 25.

2. PAN structural moulded bodies according to Claim 1, characterised in that the ratio of slenderness distribution follows a Gaussian bell curve.

3. PAN structural moulded bodies according Claims 1 and 2, characterised in that they have a roughened surface finish which is hydrophilic and has an affinity for cement.

4. PAN structural moulded bodies according to Claims 1 to 3, characterised in that the surface area is at least 15 m² /g.

5. PAN structural moulded bodies according to Claims 1 to 4, characterised in that they have a water retention value of at least 50 %.

6. PAN structural moulded bodies according to Claims 1 to 5, characterised in that the inter-capillary volume is at least 500 mm³/g.

7. PAN structural moulded bodies according to Claims 1 to 6, characterised in that the macropore volume is at least 200 mm³/g.

8. PAN structural moulded bodies according to Claims 1 to 7, characterised in that the micropore volume is at least 50 mm³/g.

9. PAN structural moulded bodies according to Claims 1 to 8, characterised in that the most frequent pore radius range is 3 500 and 6 500 µm.

## Revendications

1. Corps formés de structure PAN présentant des propriétés spécifiques pour le traitement dans des liants hydrauliques, caractérisés en ce que leur degré d'élancement s'élève de 3 à 600, le facteur de procédé est > 7,0 m²/g le module E s'élève au moins à 10 000 MPa et le facteur d'armature se trouve dans la gamme de 14 à 25.

2. Corps formés de structure PAN selon la revendication 1, caractérisés en ce que la répartition du degré d' élancement suit une courbe de probabilité de Gauss.

3. Corps formés de structure PAN selon la revendication 1 et 2, caractérisés en ce qu'ils présentent une surface rugueuse, qui doit étre dotée de qualités hydrophiles et de propriétés affines à celles du ciment.

4. Corps formés de structure PAN selon la revendication 1 à 3, caractérisés en ce que la surface est au moins de 15 m²/g.

5. Corps formes de structure PAN selon la revendication 1 à 4, caractérisés en ce qu'ils présentent un pouvoir de retenue d'eau d'au moins 50 %.

6. Corps formés de structure PAN selon la revendication 1 à 5, caractérisés en ce que le volume capillaire intermédiaire s'élève au moins à 500 mm³/g.

7. Corps formés de structure PAN selon la revendication 1 à 6, caractérisés en ce que le volume des macropores s'élève au moins à 200 mm³/g.

8. Corps formés de structure PAN selon la revendication 1 à 7, caractérisés en ce que le volume des micropores s'élève au moins à 50 mm³/g.

9. Corps formés de structure PAN selon la revendication 1 à 8, caractérisés en ce que la zone la plus fréquente de rayon des pores va de 3 500 µm à 6 500 µm.
